# EUROPÄISCHE PATENTANMELDUNG

(11) **EP 0 754 485 A1**
(43) Veröffentlichungstag der Anmeldung: **22.01.1997**
(21) Anmeldenummer: 96111183.8
(22) Anmeldetag: 11.07.1996
(51) Int. Cl.: B01D 46/24, B01D 46/42

(54) **Verfahren und Einrichtung zum Reinigen von Staubluft**

(30) Priorität: 21.07.1995 CH 2147/95
(71) Anmelder: Hunziker, Werner, CH-5054 Kirchleerau (CH)
(72) Erfinder: Hunziker, Werner, CH-5054 Kirchleerau (CH)
(74) Vertreter: Groner, Manfred, Dr.

(57) **Zusammenfassung**

Die Staubluft wird längs einem Strömungsweg durch eine poröse Filterwand (7) in eine Unterdruckatmosphäre (4') und von dort als Reinluft über eine Beschleunigungsstufe (24) abgeführt und aus dem Strömungsweg entlassen. Zwecks Ausgleichs des Strömungswiderstands im Strömungsweg wird die Filterwand (7) mit Kraftimpulsen periodisch gereinigt. Hierbei wird sie in zeitlicher Folge nur abschnittsweise mit Kraftimpulsen beaufschlagt und zwar, wenn die Filterwandabschnitte während des Beaufschlagens in einer zur Lotrechten quer orientierten Lage sind oder danach in eine solche Lage gebracht werden. In dieser Lage liegt - in Fallrichtung gesehen - die Staubatmosphäre unter und die Unterdruckatmosphäre (4') über dem Filterwandabschnitt (7).

## Beschreibung

Die vorliegende Erfindung bezieht sich auf ein Verfahren und eine Einrichtung zum Reinigen von Staubluft gemäss dem Oberbegriff der Ansprüche 1 und 3 sowie eine Arbeitsmaschine gemäss dem Oberbegriff des Anspruchs 16.

Bei kleineren Entstaubungseinrichtungen ist es bekannt, Patronenfilter aus Vliesmaterial einzusetzen. Dank der gewellten oder zickzackförmigen Anordnung des Filtermaterials lassen sich auf kleinem Raum grosse Filterflächen realisieren. Je nach Leistungsbedarf wird eine Entstaubungseinrichtung mit einer oder mehreren Filterpatronen ausgerüstet. Diese Einrichtungen verfügen über eine Staubluftkammer, in welche die Filterpatronen hineinragen sowie über eine Reinluftkammer, die mit dem Innenraum der Filterpatrone verbunden ist. An die Reinluftkammer schliesst ein Gebläse an. In kleineren Einrichtungen ist das Gebläse integriert, in grösseren separat aufgestellt oder angebaut.

Die Filterpatronen sind in der Regel vertikal eingebaut. Ihr offenes Ende weist nach oben. Die periodische Abreinigung des an der Filterpatrone anhaftenden Staubes erfolgt in der Regel durch einen kurzen, sehr kräftigen Luftstoss aus einem an die Einrichtung angebauten oder in diese integrierten Luftbehälter. Der Luftstoss erfolgt aus einer Blasdüse durch einen Injektor hindurch und reisst dabei Umgebungsluft mit. Die Abreinigung bei diesen Einrichtungen erfolgt weniger durch den in der Filterpatrone erzeugten Überdruck als durch sehr starke - durch die einströmende Luft erzeugte Turbulenzen und damit verbundene Vibrationen.

Eine weitere Einrichtung ist aus der CH-A-660980 bekannt. Auch hier wird aus einem aufgeladenen Druckluftbehälter Luft in die Patrone eingeblasen. Während dem Abreinigungsvorgang wird die Patrone selbsttätig verschlossen und die Abreinigung erfolgt vorwiegend durch den in der Patrone erzeugten Überdruck und nicht durch die weitgehend unterdrückten Vibrationen. Untersuchungen haben gezeigt, dass das Vermeiden von Vibrationen im Bereich des Filtermediums eine wesentliche Voraussetzung für eine optimale Filterwirkung ist.

Die beiden erwähnten Einrichtungen haben beide den wesentlichen Nachteil, dass die Reinigungswirkung mit der Zeit immer schlechter wird und nach einiger Zeit ein Ausbau der Patronen und eine gründliche Reinigung erforderlich ist. Das hängt damit zusammen, dass einerseits bei der Abreinigung der Filterkuchen weitgehend zerstäubt wird und anderseits die Abreinigung im oberen Patronenteil ohnehin wirksamer ist und zudem ein Teil des oben abgeblasenen Staubes gleich wieder etwas weiter unten oder an Nachbarpatronen angesaugt wird. Das hat zur Folge, dass in kurzen Intervallen abgereinigt werden muss, mit einem entsprechend hohen Verbrauch an Druckluft.

Ähnlich verhält es sich mit horizontal oder schräg eingebauten Patronen, die untere Patronenseite liegt zwar günstig und wird gut abgereinigt, es ist jedoch auf der oberen Seite unmöglich mit vertretbaren Mitteln den Staub aus dem gefalteten Filtervlies hinauszublasen. Nach einer gewissen Zeit ist einfach nur noch die untere Hälfte wirksam, mit einer entsprechenden Reduktion der Filterleistung.

Die vorliegende Erfindung stellt sich die Aufgabe, eine Einrichtung der eingangs genannten Art derart zu verbessern, dass sie mit geringerem Energieaufwand eine gleichbleibend gute Filtrierleistung bei geringer Lärmentwicklung gewährleistet und dass sie so kostengünstig herstellbar ist, dass sie sich als Baustein eignet, mit der durch einfache Multiplikation grosse Anlagen herstellbar sind.

Erfindungsgemäss wird diese Aufgabe gelöst durch die kennzeichnenden Merkmale der Ansprüche 1, 3 und 6.

Ein Vorteil der Erfindung ist, dass im Unterschied zu allen bekannten Vorrichtungen die ganze Filteroberfläche sehr gut unter Kontrolle zu halten und zu steuern ist. Bei der bekannten Luftschock-Abreinigung durch die Luftaustrittsöffnung ist ein gleichmässiger Zustand der anhaftenden Staubschicht über die ganze Filteroberfläche nicht erreichbar. Die Erfindung kommt der Idealvorstellung nahe, auf der Filteroberfläche stets nur so viel vom Staubbelag zu entfernen, als für das Konstanthalten der Nennleistung notwendig ist, was eine wesentlich bessere Qualität der gereinigten Luft bewirkt.

Dank der Erfindung ist weiter eine optimale Lärmdämmung erreichbar, wobei die erforderlichen Dämm-Massnahmen denkbar einfach und billig sind. Es können Schallwerte erreicht werden, die sonst nur mit sehr aufwendigen Massnahmen erreichbar wären.

Anhand der bei liegenden schematischen Zeichnung wird die Erfindung beispielsweise erläutert. Es zeigen:

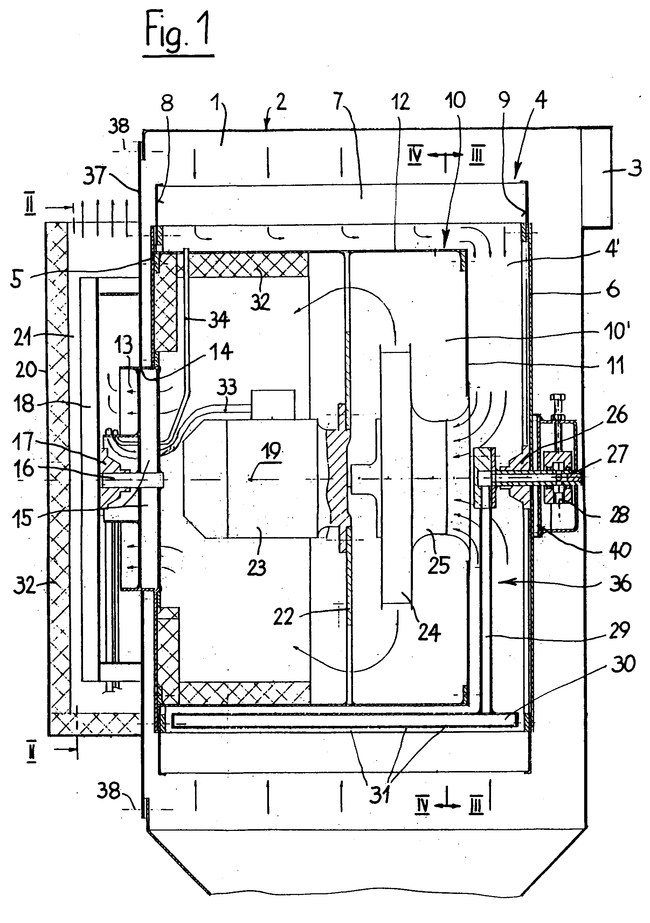

- Fig. 1: einen Vertikalschnitt durch eine Einrichtung,

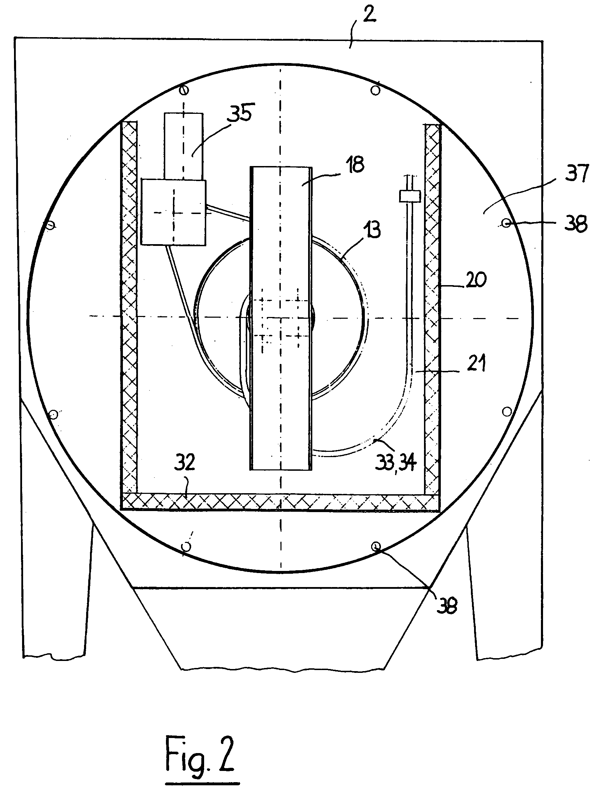

- Fig. 2: einen Schnitt längs der Linie II-II in Fig. 1,

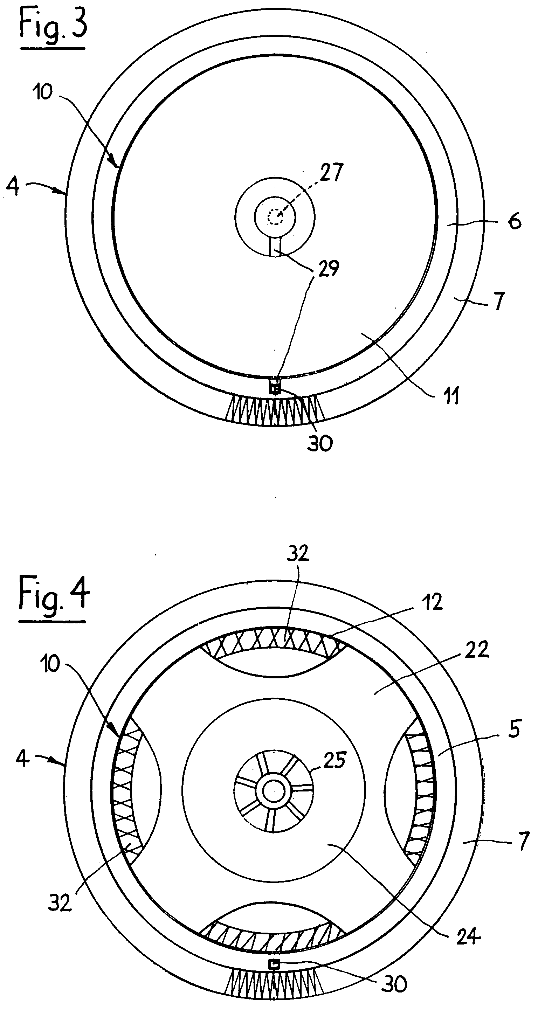

- Fig. 3 und 4: je einen Schnitt längs den Linien III-III bzw. IV-IV in Fig. 1 in etwas kleinerem Massstab.

Die Hinweisziffer 1 bezeichnet eine durch ein Gehäuse 2 begrenzte Arbeitskammer. Unten verjüngt sich das zumindest eine Filtereinrichtung enthaltende Gehäuse 2 zu einem Auslauftrichter mit einem nicht dargestellten Staubbehälter oder einer Austragschleuse. In der Arbeitskammer 1 kann nebst der Filtereinrichtung noch eine eine Staubatmosphäre erzeugende Bearbeitungseinrichtung, wie zum Beispiel eine Strahleinrichtung vorhanden sein. Umfasst sie nur ein oder mehrere Filter, bildet sie ein selbständiges Aggregat, das über einen Rohrstutzen 3 an den Arbeitsraum einer stauberzeugenden Bearbeitungsmaschine angeschlossen wird. Das Gehäuse 2 bzw. eine damit verbundene Bearbeitungsmaschine ist in der Regel in einer Werkhalle aufgestellt und von der dort üblichen Normalatmosphäre umgeben.

In der Arbeitskammer 1 ist eine im wesentlichen runde, eine Unterdruckkammer 4' begrenzende Trommel 4 mit einer ringförmigen Wand 5 sowie einer kreisscheibenförmigen Wand 6 angeordnet, deren Umfangswand aus einer zickzack-gefalteten Filtermatte 7 aus vliesartigem, gewobenem Filterstoff oder Spezialpapier besteht. Auf den einander zugewandten Seiten bilden die beiden zur Trommelachse 19 koachsialen Wände 5 und 6 in ihrem peripheren Bereich je eine Nut 8, 9, in welchen die Filtermatte 7 formschlüssig und vorzugsweise durch Eingiessen auch dicht gehalten ist. Achsial zur horizontalen Trommelachse 19 befindet sich in der Trommel 4 eine zweite zylindrische, eine Überdruckkammer 10' begrenzende Trommel 10, die mit der ersten einen Teil der ringförmigen Wand 5 gemeinsam hat und parallel dazu eine ringförmige Wand 11 aufweist, welche durch eine Mantelwand 12 mit der Wand 5 verbunden ist. An der Wand 5 ist achsial ein Rohrstutzen 13 befestigt, der mit radialem Spiel eine Öffnung 14 in einer Trägerplatte 37 durchsetzt, die mittels Schrauben 38 am Gehäuse 2 befestigt ist und die eine Öffnung 39 im Gehäuse 2 abschliesst. Der Rohrstutzen 13 verbindet somit das Innere der zweiten Trommel 10 mit der Umgebungsatmosphäre. Im Rohrstutzen 13 sitzt fest ein diametrales Speichenpaar 15, das einen zur Trommelachse 19 achsialen Achszapfen 16 festhält. Der Achszapfen 16 ist drehbar in einem Lager 17 gelagert, das an einem mit der Trägerplatte 37 fest verbundenen Joch 18 befestigt ist.

Das Joch 18 befindet sich innerhalb einer an der Trägerplatte 37 erkerartig befestigten Gehäuseschale 20, die eine zur Umgebungsatmosphäre offene Entspannungskammer 21 begrenzt und die Mündung des Rohrstutzens 13 abschirmt. Die Trommel 10 ist im Inneren mit einer durchbrochenen, zur Trommelachse 19 quer orientierten Wand 22 unterteilt und versteift, an der achsial zur Trommelachse 19 ein Elektromotor 23 angeflanscht ist. Dieser treibt das Flügelrad eines ebenfalls an der Wand 22 befestigten Zentrifugalgebläses 24. Dessen zum Flügelrad koachsialer Saugstutzen 25 ist durch eine entsprechende Öffnung in der Wand 11 der Trommel 10 an die Unterdruckkammer 4' angeschlossen.

Die Trommel 4 ist mit einem Drehlager 26 auf einer zur Trommelachse 19 achsialen Hohlachse 27 drehbar gelagert. Die mittels eines Jochs 40 mit der Trägerplatte 37 fest verbundene Hohlachse 27 ist einerseits über einen Anschluss 28 an eine nicht dargestellte Blasluftquelle anschliessbar und anderseits durch ein radiales Rohrstück 29 mit einem zur Trommelachse 19 parallelen, zwischen den Mantelwänden der Trommeln 4 und 10 liegenden Rohrabschnitt 30 verbunden. Der sich über die Breite der Filtermatte 7 erstreckende Rohrabschnitt 30 ist mit einer Reihe gegen die Filtermatte 7 gerichteter Blasöffnungen 31 versehen, durch die der ihnen gegenüberliegende (im Querschnitt dreieckförmige) Abschnitt der Filtermatte 7 mit Blasluft beaufschlagbar ist. Die Hohlachse 27, das Rohrstück 29 und der Rohrabschnitt 30 sind Teile einer Abreinigungsluftleitung 36, die mit der erwähnten Blasluftquelle über ein steuerbares Ventil verbindbar ist und die der Abreinigung der Filtermatte 7 dient. Das Innere der Trommel 10 und der Gehäuseschale 20 sind mit Schallisolationsmatten 32 verkleidet, welche das Gebläsegeräusch absorbieren.

Durch den Rohrstutzen 13 sind die flexiblen Speiseleitungen 33 zum Motor 23 sowie Messleitungen 34 zum Erfassen der Druckverhältnisse in den Trommeln 4 und 10 geführt. Das Drehen der Trommeln 4 und 10 um jeweils 360° um die Trommelachse 19 erfolgt durch einen Antrieb 35, der mit einem endlosen Ketten- oder Riemenstrang am Rohrstutzen 13 angreift. Der Antrieb 35 ist wahlweise nach einer der beiden Drehrichtungen antreibbar. Der Antrieb 35 könnte auch unmittelbar auf der Welle 16 angebracht werden.

Ist der Motor 23 eingeschaltet und die Einrichtung in Betrieb, saugt das Gebläse 24 Luft durch die Filtermatte 7 aus der gegen die umgebende Normalatmosphäre nicht abgedichteten Arbeitskammer 1 in das Innere der Trommel 4. An den Übergängen von der Umgebungsatmosphäre in die Arbeitskammer 1 und von dieser in die Trommel 4 entsteht je ein Druckgefälle, so dass unter Betriebsbedingungen keine Staubluft aus der Arbeitskammer 1 in die Umgebungsatmosphäre austritt. Durch den Saugstutzen 25 saugt das Gebläse 24 die Reinluft aus der Trommel 4 und fördert sie in die Trommel 10, in deren Innerem ein über der Normalatmosphäre liegender Überdruck aufgebaut wird. Aus dem Inneren der Trommel 10 strömt die Reinluft dem Druckgefälle folgend durch den Rohrstutzen 13 in die Entspannungskammer 21 und weiter in die Normalatmosphäre der Umgebung.

Wegen der vom Gebläse 24 erzwungenen Luftströmung wird der Schwebestaub der Arbeitskammer 1 aussen auf der Filtermatte 7 niedergeschlagen, wodurch deren Strömungswiderstand mit zunehmender Staubschichtdicke steigt. Damit die Luftströmung nicht zum Erliegen kommt bzw. um einen möglichst konstanten Strömungswiderstand zu erzielen, wird die Filtermatte 7 periodisch mit Luft aus der Abreinigungsluftleitung 36 gereinigt, wozu die Innenseite der Filtermatte 7 mit Luft aus den Blasöffnungen 31 beaufschlagt wird. Hierzu lässt man die Abreinigungsluft gleichmässig aus den Blasöffnungen 31 austreten, und dreht gleichzeitig die Trommeln 4 und 10 mit Antrieb 35 mit gleichbleibender Geschwindigkeit um 360°. Die Filtermatte 7 wird dabei an den Blasöffnungen 31 vorbeigeführt und jeweils der in ihrem Wirkbereich liegende Abschnitt (in Form einer im Querschnitt dreieckförmigen Tasche von der aussen anhaftenden Staubschicht befreit. Ein Unterbrechen des Filtrierbetriebs ist dabei nicht notwendig. Wesentlich ist, dass die Filtermatte 7 entlang ihrer Bewegungsbahn im oder nach dem Wirkbereich der Blasöffnungen 31 eine Lage durchläuft, in der - in Fallrichtung gesehen - die Filtermatte 7 über der durch die Blasluft abgelösten Staubschicht liegt, damit der abfallende Staub sich nicht erneut an einer tiefer liegenden Stelle der Filtermatte 7 niederschlagen kann.

Entsprechend der Staubbelastung in der Staubluftatmosphäre wird über ein Zeitschaltwerk eine optimale Dauer für die Reinigungsintervalle vorgewählt. Für die Auslösung des Abreinigungsvorganges kann auch der durch die Staubbelastung zunehmende - und über die Messleitung 34 detektierte Filterwiderstand mittels eines Differenzdruckschalters herangezogen werden. Der Antrieb 35 dreht die Trommeln 4, 10 langsam um 360° und während dieser Zeit wird über ein Elektroventil die Blasluft zugeschaltet. Der Rücklauf in die Ausgangslage kann durch eine Umkehr des Antriebs 35, durch einen Federrückzug oder dgl. erfolgen. Als Drehantrieb 35 geeignet wäre beispielsweise ein Luft-Drehzylinder.

Vorteilhaft ist, wenn die Abreinigungsluft nur auf einen geringen Überdruck von 1 bis 2 Bar vorgespannt ist und die Beaufschlagungsdauer kurz ist. Damit wird der abgelöste, kompakte Filterkuchen nicht erneut zerstäubt und die Energiekosten können für die Reinigung niedrig gehalten werden. Zudem kann die Trommel 4 vergleichsweise rasch gedreht und der Fliehkraft die Wirkung der Abreinigungsluft unterstützt werden. Der exakt steuerbare Abreinigungsvorgang ergibt als weiteren Vorteil, dass die Schwankungen des Strömungswiderstandes an der Filtermatte 7 klein gehalten werden können.

Für die Drehbewegung der Trommeln 4 und 10 kann bei unterbrochenem Betrieb der Antrieb 35 entfallen. Bei unterbrochenem Betrieb können die, beim Anfahren des Gebläses 24 entstehenden Reaktionskräfte für die Drehung der Trommeln 4 und 10 genutzt werden, das heisst, dass die Filter-Abreinigung jeweils beim Einschalten des Gebläses erfolgt, das beim Motor-Anlauf wesentlich höhere Motordrehmoment und die Masseträgheit des Flügelrades reichen aus um die Trommeln 4 und 10 in etwa 3 bis 5 Sekunden um 360° zu drehen. Gleichzeitig kann mit dem Spannen einer Feder oder mit dem Anheben eines Gewichtes der Rücklauf in die Ausgangslage vorbereitet werden. Hat das Gebläse 24 die Betriebsdrehzahl erreicht, sind die noch auf die Trommeln 4 und 10 wirkenden Torsionskräfte nur noch gering, so dass sich der Rücklauf leicht über die gespannte Feder oder das Gegengewicht realisieren lässt. Während der Anlaufphase, während der sich die Trommeln 4, 10 entgegen der Gebläse-Drehrichtung um 360° drehen, wird über ein Elektroventil die Abblasluft zugeschaltet. Die ungefähr 3 bis 5 Sekunden, die beim Anlaufvorgang zur Verfügung stehen, reichen aus für den Abreinigungsvorgang.

Beim beschriebenen Beispiel bilden die Trägerplatte 37 und die Joche 18 und 40 sozusagen das starre Chassis der als Baueinheit bzw. Modul konzipierten Entstaubungseinrichtung. An diesem Chassis sind alle wesentlichen Elemente, das heisst, die Trommeln 4 und 10, der Elektromotor 23 sowie das Gebläse 24 und die Abreinigungsluftleitung 36 gelagert, so dass die Entstaubungseinrichtung vorgefertigt und als ganzes an eine Staubluft- oder Arbeitskammer angeflanscht werden kann. Wird die Entstaubungseinrichtung als vergleichsweise klein dimensioniertes Modul gefertigt, können in einem Arbeitsprozess mit höherer Filterleistung mehrere solcher Module eingebaut werden.

Da bei der erfindungsgemässen Entstaubungseinrichtung die Luftmenge für das Abreinigen gering ist, entfallen die sonst üblichen Druckluftbehälter und die Einrichtung kann mit kleinem Querschnitt direkt an ein vorhandenes Druckluftnetz angeschlossen werden.

## Patentansprüche

1. Verfahren zum Reinigen von Staubluft, die aus einer Staubluftatmosphäre längs einem Strömungsweg durch eine poröse Filterwand (7) in eine Unterdruckatmosphäre (4') und von dort als Reinluft über eine Beschleunigungsstufe (24) abgeführt und aus dem Strömungsweg entlassen wird, wobei zwecks Ausgleichs des Strömungswiderstands im Strömungsweg die Filterwand (7) mit Kraftimpulsen beaufschlagt wird, dadurch gekennzeichnet, dass in zeitlicher Folge die Filterwand (7) nur abschnittsweise mit Kraftimpulsen beaufschlagt wird, und dass die Filterwandabschnitte während dem Beaufschlagen mit den Kraftimpulsen in einer zur Lotrechten quer orientierten Lage sind oder danach in eine solche Lage gebracht werden, so dass in Fallrichtung gesehen die Staubluftatmosphäre unter und die Unterdruckatmosphäre (4') über dem Filterwandabschnitt (7) liegt.

2. Verfahren nach Anspruch 1, dadurch gekennzeichnet, dass die Filterwandabschnitte nacheinander in die erwähnte Lage gebracht werden und dass vorzugsweise an die Beschleunigungsstufe (24) eine Überdruckatmosphäre (10') höheren Drucks als in der Staubluftatmosphäre anschliesst.

3. Einrichtung zum Entstauben einer in einer Arbeitskammer (1) anfallenden Staubluftatmosphäre, die einen von der Arbeitskammer (1) zu einer Normalatmosphäre führenden Strömungsweg bildet, in welchem Strömungsweg hintereinander eine Filterwand (7), eine Unterdruckkammer (4') mit geringerem Druck als in der Arbeitskammer (1), ein Beschleuniger (24) und eine Überdruckkammer (10') mit höherem Druck als in der Unterdruckkammer (4') angeordnet sind, wobei in der Unterdruckkammer (4') eine gegen die Filterwand (7) wirksame Abreinigungsluftleitung (36) endet, dadurch gekennzeichnet, dass die Filterwand (7), die Unterdruckkammer (4'), der Beschleuniger (24) und die Überdruckkammer (10') zu einer Baueinheit zusammengefasst sind, dass die Baueinheit mindestens ein eine Drehachse (19) bestimmendes Lagerorgan (16, 17 bzw. 26, 27) aufweist, um die die Filterwand (7) dreh- und relativ zur Abreinigungsluftleitung (36) verschiebbar ist und dass der Strömungsweg nach der Überdruckkammer (10') einen zur Drehachse (19) parallelen Abschnitt (13) aufweist.

4. Einrichtung nach Anspruch 3, dadurch gekennzeichnet, dass die Filterwand (7), die Unterdruckkammer (4'), der Beschleuniger (24), die Überdruckkammer (10') und der erwähnte Abschnitt (13) des Strömungsweges achsial zur Drehachse angeordnet sind.

5. Einrichtung nach Anspruch 4, dadurch gekennzeichnet, dass der Beschleuniger (24) mindestens teilweise innerhalb der Unterdruckkammer (4') liegt.

6. Einrichtung nach Anspruch 4, dadurch gekennzeichnet, dass der Beschleuniger (24) achsial in der Überdruckkammer (10') und diese axial in der Unterdruckkammer (4') angeordnet ist.

7. Einrichtung nach einem der Ansprüche 3 bis 6, dadurch gekennzeichnet, dass der Beschleuniger (24) und die Überdruckkammer (10') koachsial in einem gemeinsamen trommelförmigen Gehäuse (10) angeordnet sind, welches achsial in einem ebenfalls trommelförmigen, die Unterdruckkammer (4') begrenzenden Gehäuse (4) gelagert und mit diesem fest verbunden ist.

8. Einrichtung nach Anspruch 7, dadurch gekennzeichnet, dass das Gehäuse (4) mittels des Lagerorgans (16, 17 bzw. 26, 27) um die Drehachse (19) drehbar gelagert ist.

9. Einrichtung nach Anspruch 7 oder 8, dadurch gekennzeichnet, dass die die Drehachse (19) konzentrisch umgebende Wand des trommelförmigen, die Unterdruckkammer (4') begrenzenden Gehäuses (4) durch die Filterwand (7) gebildet ist.

10. Einrichtung nach Anspruch 9, dadurch gekennzeichnet, dass die Filterwand (7) mit einer Zickzack-Faltung versehen ist.

11. Einrichtung nach einem der Ansprüche 4 bis 10, dadurch gekennzeichnet, dass der Beschleuniger (24) von einem zur Drehachse (19) koachsialen Elektromotor (23) angetrieben ist.

12. Einrichtung nach Anspruch 11, dadurch gekennzeichnet, dass der Elektromotor (23) mindestens teilweise innerhalb der Überdruckkammer (10') angeordnet ist.

13. Einrichtung nach einem der Ansprüche 43 bis 12, dadurch gekennzeichnet, dass die Unterdruckkammer zu gegenüberliegenden Seiten im Lagerorgan (16, 17 bzw. 26, 27) gelagert und ein Teil (16, 17) des Lagerorgans (16, 17 bzw. 26, 27) im erwähnten Abschnitt (13) des Strömungskanals angeordnet ist.

14. Einrichtung nach einem der Ansprüche 3 bis 13, dadurch gekennzeichnet, dass die Abreinigungsluftleitung (36) achsial zur Drehachse (19) der Baueinheit in die Unterdruckkammer (4') geführt ist.

15. Einrichtung nach Anspruch 14, dadurch gekennzeichnet, dass die Abreinigungsluftleitung (36) einen zur Drehachse (19) parallelen Ast (30) mit einer gegen die Filterwand (7) gerichteten Blasdüsenreihe (31) aufweist.

16. Einrichtung nach Anspruch 14, dadurch gekennzeichnet, dass ein Teil (27) der Lagerorgane (16, 17 bzw. 26, 27) ein Hohlprofil ist und einen Abschnitt der Abreinigungsluftleitung (36) bildet.

17. Arbeitsmaschine mit einer eine Staubatmosphäre wenigstens teilweise begrenzenden Arbeitskammer (1) und mit einer Einrichtung nach einem der Ansprüche 3 bis 15, welche Einrichtung einen von der Arbeitskammer (1) zur Umgebungsatmosphäre führenden Strömungsweg bildet, in welchem Strömungsweg hintereinander eine Filterwand (7), eine Unterdruckkammer (4'), ein Beschleuniger (24) und eine Überdruckkammer (10') angeordnet sind, wobei in die Unterdruckkammer (4') eine gegen die Filterwand (7) wirksame Abreinigungsluftleitung (36) führt, dadurch gekennzeichnet, dass die Filterwand (7), die Unterdruckkammer (4'), der Beschleuniger (24) und die Überdruckkammer (10') zu einer Baueinheit zusammengefasst sind, dass die Baueinheit mindestens ein eine Drehachse (19) bestimmendes Lagerorgan (16, 17 bzw. 26, 27) aufweist, um die die Filterwand (7) dreh- und relativ zur Abreinigungsluftleitung (36) verschiebbar sind und dass der Strömungsweg der Überdruckkammer (10') einen zur Drehachse (19) parallelen Abschnitt (13) aufweist, durch den der Strömungsweg aus der Arbeitskammer (1) in die Umgebungsatmosphäre führt.

18. Arbeitsmaschine nach Anspruch 17, dadurch gekennzeichnet, dass die Arbeitskammer (1) einen Teil (27) der Lagerorgane (16, 17 bzw. 26, 27) aufweist.

19. Arbeitsmaschine nach Anspruch 17 oder 18, dadurch gekennzeichnet, dass der erwähnte Abschnitt (13) des Strömungsweges ein zur Drehachse (19) achsialer, das Gehäuse (2) der Arbeitskammer (1) durchsetzter Rohrstutzen ist.

20. Arbeitsmaschine nach Anspruch 19, dadurch gekennzeichnet, dass der Rohrstutzen (13) in eine zur Normalatmosphäre offene Entspannungskammer (21) mündet, und dass vorzugsweise die Überdruckkammer (10') und die Entspannungskammer (21) mit schallisolierendem Material (32) ausgekleidet sind.

21. Arbeitsmaschine nach Anspruch 19 oder 20, dadurch gekennzeichnet, dass der Rohrstutzen (13) Teil der Baueinheit und fest mit dieser verbunden ist.
